# EUROPEAN PATENT SPECIFICATION

(11) **EP 0 660 907 B1**
(45) Date of publication and mention of the grant of the patent: **21.04.1999**
(21) Application number: 93917067.6
(22) Date of filing: 09.07.1993
(51) Int. Cl.: F16L 33/20, F16L 37/088

(54) **TUBULAR ASSEMBLY AND METHOD OF MAKING SAME**
GESTECKTE ROHRANSCHLUSSVORRICHTUNG UND HERSTELLUNG
ENSEMBLE TUBULAIRE ET SON PROCEDE DE FABRICATION

(30) Priority: 21.09.1992 WO PCT/US92/08007
(43) Date of publication of application: 05.07.1995
(73) Proprietor: PROPRIETARY TECHNOLOGY, INC., Bloomfield Hills, MI 48303-7048 (US)
(72) Inventor: BARTHOLOMEW, Donald Dekle, Mt. Clemens, MI 48045 (US)
(74) Representative: Harwardt, Günther, Dipl.-Ing.
(86) International application number: US9306477
(87) International publication number: WO9407076

(56) References cited:
- GB-A- 801 859
- US-A- 2 167 258
- US-A- 3 091 483
- US-A- 3 610 664
- US-A- 3 666 297
- US-A- 3 756 632
- US-A- 3 923 323
- US-A- 4 068 863
- US-A- 4 191 408
- US-A- 4 256 335
- US-A- 4 712 813

## Description

### BACKGROUND OF THE INVENTION

This invention relates generally to a connector assembly through which a fluid flows and specifically to an expandable tubular member having a bushing installed thereupon and a ferrule inserted therewithin.

In the automotive industry, as well as for many other industries, the need always exists for low cost, reliable and easy to assemble components. This need is especially apparent with respect to providing a connection between fluid conveying conduits, such as fuel, brake or refrigerant lines. Traditionally, such a connection is comprised of a male tubular member being retained within a female housing or connection retained by a threaded fitting or nut. However, more recently, snap together quick connect attachments have been used in place of threaded fittings.

In order to retain the quick connect fastener or threaded fitting, some tubular members require a bead to be circumferentially located therearound. This outwardly projecting bead may be either integrally formed or mechanically attached onto the outside of the tubular member. Furthermore, it is important that this bead be firmly attached to a predetermined longitudinal position on the tubular member in order to maintain a secure and leak-resistant fit within the mating female housing or connector half. If such a connection becomes dislodged or leaks, the vehicle could become disabled or could even pose a safety hazard to its occupants.

US-A-3 666 297 discloses a fitting for interconnecting a tube and a fluid distribution header. The fitting has a male member comprising a tubular ferrule into which the end of a hollow tube is glued or which is moulded around the end of the tube. The end of the tube abuts a shoulder on the end of the ferrule. The latter carries O-ring seals to seal the male member to the header. An eyelet having an elastomeric sleeve thereon is inserted into the end of the tube and mechanically expanded to sandwich the sleeve, tube and ferrule together.

US-A-3 610 664 describes a hose connection in which a stiffening sleeve is pressed into an expandable hose, the seelve having an annular enlargement which causes an annular enlargement on the external surface of the hose. An external sleeve surrounds the hose and is threadably engaged with a housing. An end of the external sleeve engages the enlargement on the hose and forces it against a shoulder in the housing.

### SUMMARY OF THE INVENTION

In accordance with the present invention we provide a tubular assembly for use in communicating a fluid media in combination with a housing having a receivable female configuration thereto, said housing further having a cylindrical inside surface which defines a central through bore extending therein, said tubular assembly comprising: a tubular member being cylindrical in shape and having a male configuration thereof said tubular member further having an inside surface and an outside surface with a distal end thereupon, said outside surface having a predetermined position thereon, means to seal between said tubular member and said inside surface of said housing; a bushing located at said predetermined position along said outside surface of said tubular member and cooperatively fitting therearound, said bushing restricting radial expansion of said tubular member; and a ferrule having a longitudinal portion thereof which is cylindrical in shape being inserted within said distal end of said tubular member, said tubular member at said predetermined position being restricted from radial outward expansion by said bushing whereas said bushing is securely retained at said predetermined position upon said tubular member, characterised in that said tubular member is composed of an expandable material; in that said predetermined position and said bushing are located at a predetermined longitudinal distance from said distal end; and in that portions of said inside and outside tubular member surfaces which are longitudinally adjacent to and on each side of said predetermined position are expanded radially outward by said longitudinal portion of said ferrule therewithin with respect to the tubular member at said predetermined position which is restricted from radial outward expansion by the bushing; and the sealing means seals between said outside surface of the tubular member and said inside surface of the housing.

The ferrule may further have an outwardly projecting flange at its trailing end which serves to retain a seal thereupon. Also, in another embodiment, a lip located around the circumference of the ferrule's flange and projecting normal thereto serves to centre the distal end of the tubular member within a female housing.

Accordingly, the present invention has many advantages over the prior art. The ferrule acts to securely fasten and locate the bushing at a predetermined position on the tubular member. This provides a stronger attachment than that conventionally used. Furthermore, the same ferrule acts to retain the seal onto the tubular member. Furthermore, the ferrule acts to centre the tubular member within its mating connector. Thus, a single ferrule of the present invention serves multiple functions while being easily installed within the tubular member.

Additional advantages and features of the present invention will become apparent from the following description and appended claims, taken in conjunction with the accompanying drawings.

### BRIEF DESCRIPTION OF THE DRAWINGS

FIG. 1 is an exploded perspective view showing a first preferred embodiment of the present invention tubular assembly in relation to a mating female housing which is shown partially in section;
FIG. 2 is a sectional view showing the first preferred embodiment of the present invention tubular assembly in relation to the mating female housing, taken along line 2-2 from FIG. 1;
FIG. 3 is a sectional view showing the first preferred embodiment of the present invention tubular assembly, taken along line 2-2 from FIG. 1;
FIG. 4 is a side elevation showing a tubular member with a preformed groove therearound of a second preferred embodiment of the present invention tubular assembly, taken along line 2-2 from FIG. 1;
FIG. 5 is a sectional view showing a third preferred embodiment of the present invention tubular assembly, taken along line 2-2 from FIG. 1;
FIG. 6 is a sectional view showing a fourth preferred embodiment of the present invention tubular assembly, taken along line 2-2 from FIG. 1;
FIG. 7 is a sectional view showing a fifth preferred embodiment of the present invention tubular assembly, taken along line 2-2 from FIG. 1;
FIG. 8 is a side elevation showing the tubular member prior to the first manufacturing step for the first preferred embodiment of the present invention tubular assembly of FIGS. 1-3;
FIG. 9 is a side elevation showing the first step in the process to manufacture the present invention tubular assembly of FIGS. 1-3;
FIG. 10 is a side elevation showing the second step in the process to manufacture the present invention tubular assembly of FIGS. 1-3;
FIG. 11 is a side elevation showing the third step in the process to manufacture the present invention tubular assembly of FIGS. 1-3.

### DETAILED DESCRIPTION OF THE PREFERRED EMBODIMENTS

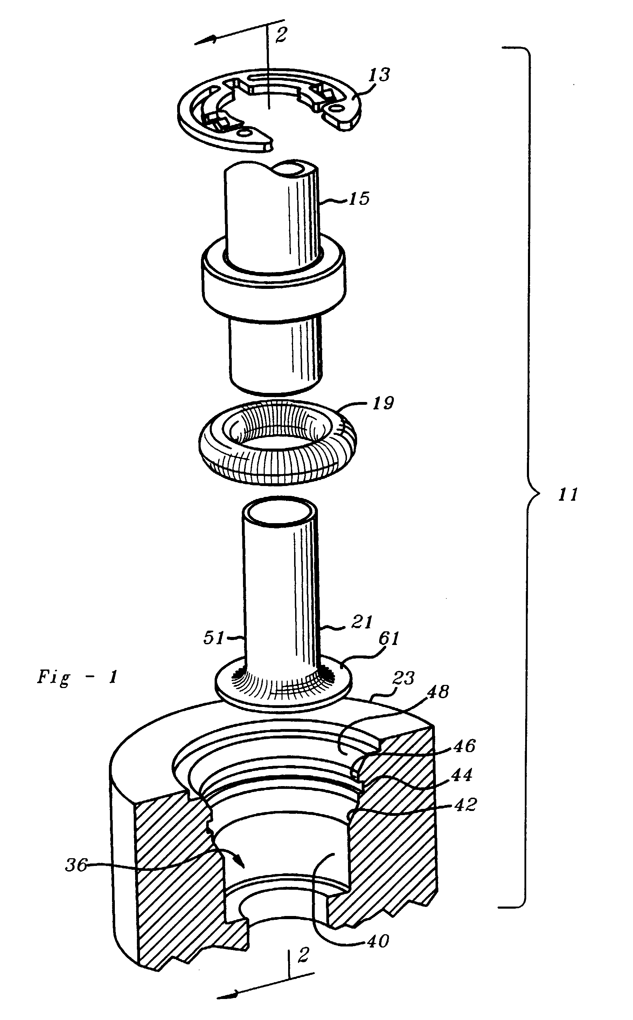

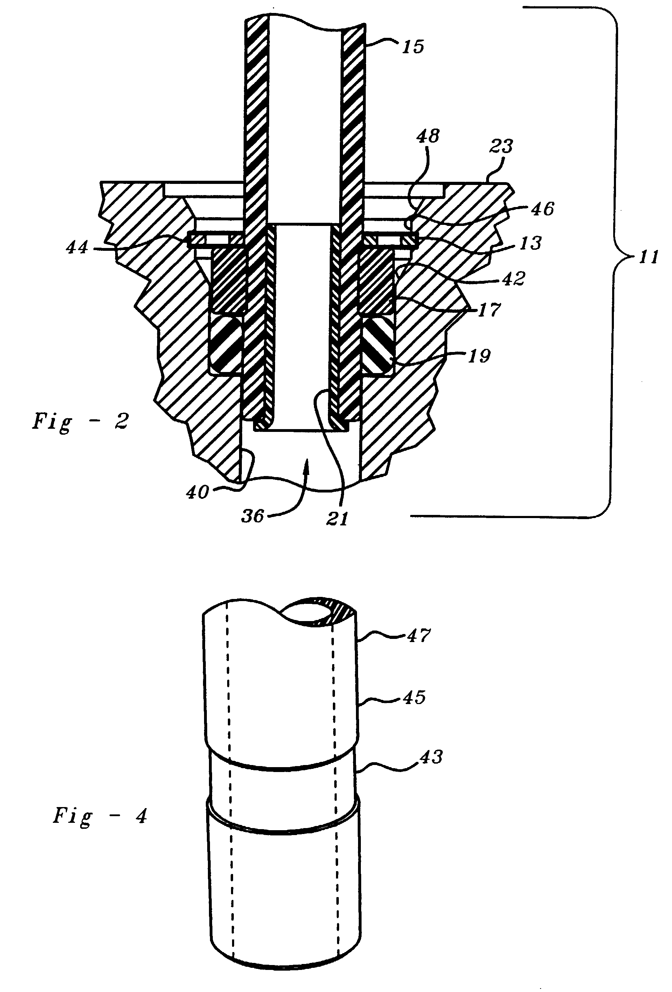

Referring to FIGS. 1 and 2, a first preferred embodiment of a connector assembly 11 of the present invention is comprised of a retainer 13, a conduit or tubular member 15, a bead or bushing 17, a seal 19, a ferrule 21 and a housing 23. Connector assembly 11 acts as a fluid conduit for a fuel, braking or refrigeration system within an automotive vehicle or the like. Therefore, tubular member 15, the male part, must be securely affixed within mating housing 23, the female part.

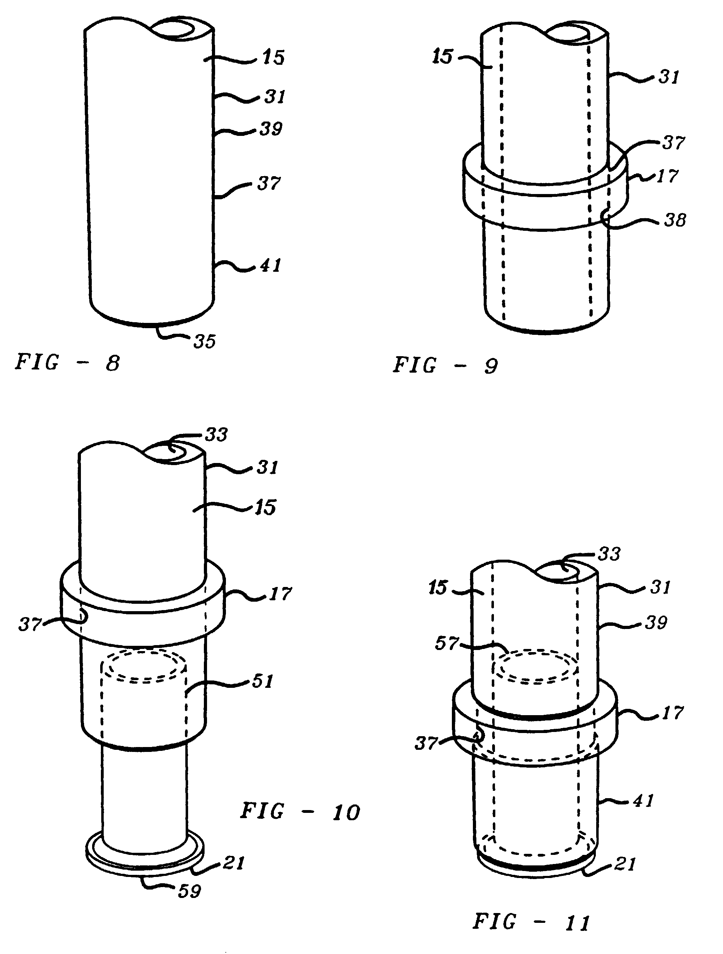

Referring to FIGS. 1 through 3, tubular member 15, bushing 17 and ferrule 21 define a tubular assembly 25. Tubular member 15 is an elongated cylindrically-shaped part having an outside surface 31, an inside surface 33 and a distal portion 35 at the end thereof. Outside surface 31 of tubular member 15 has a position 37 located a predetermined longitudinal distance from distal end 35 where bushing 17 is affixed. Bushing 17 is positioned at a distance far enough back from distal end 35 to accommodate "piloting" tubular member 15 into a through bore 36 which is defined by an inside surface 40 of housing 23. In the first preferred embodiment, as can best be seen in FIG.9 an outside surface 38 of tubular member 15, located at position 37, is flush with the typical cross sectional cylindrical shape of longitudinally adjacent portions 39 and 41 prior to installation of bushing 17. Alternatively, a second preferred embodiment of the tubular member of the present invention is shown in FIG. 4. In this embodiment a circumferential groove 43 can be formed within outside surface 45 of tubular member 47. This allows for more positive positioning and frictional retention of the subsequently assembled bushing 17 (see Figure 3). Tubular members 15 and 47 are made from a semi-flexible and expandable elastomeric material such as rubber, however, expandable polymeric and metallic materials can also be used.

Returning to the first illustrative embodiment of FIGS. 1-3, provision must also be made in housing 23 for bushing 17 to be seated within a tapering bore portion 42 thereof. An exterior side end of bushing 17 engages springing retainer 13, thereby transferring the forces that would otherwise separate tubular member 15 from housing 23. Retainer 13 acts to receive these separation forces on tubular member 15 from bushing 17 and transfer the forces to female housing 23 by interlocking with the rear wall of recessed bore 44 which is provided in retainer bore 46. Moreover, a lead-in chamfer 48 aids in the installation of retainer 13. Springing retainer 13 is a quick connect fastener that is compressibly squeezed inward toward the longitudinal axis of tubular member 15 by insertion into lead-in chamfer 48 of housing 23.

Bushing 17 is annular shaped and is preferably defined by quadrilateral walls having a rectangular cross sectional shape thereto. However, as is known to one skilled in the art, such a bushing 17 may be U-shaped or have a circular cross sectional shape thereto. Bushing 17 is made from a metallic material having sufficient hoop strength to withstand the radially outward-directed forces acting thereupon.

Ferrule 21 has a cylindrically-shaped longitudinal portion 51 with an inside surface 53 and an outside surface 55. Outside surface 55 of ferrule 21 has a larger diameter than does the typical inside surface 33 of tubular member 15. Furthermore, ferrule 21 has a leading end 57 and an opposite trailing end 59. A flange 61 is located at trailing end 59 of ferrule 21 and radially extends outward normal to said longitudinal portion 51. In this embodiment, flange 61 of ferrule 21 does not radially extend past outer surface 31 of tubular member 15. Therefore, distal end 35 of tubular member 15 may be provided with a taper 65 therearound, thus, allowing for easy centering and installation into housing 23 (see FIGS. 1 and 2).

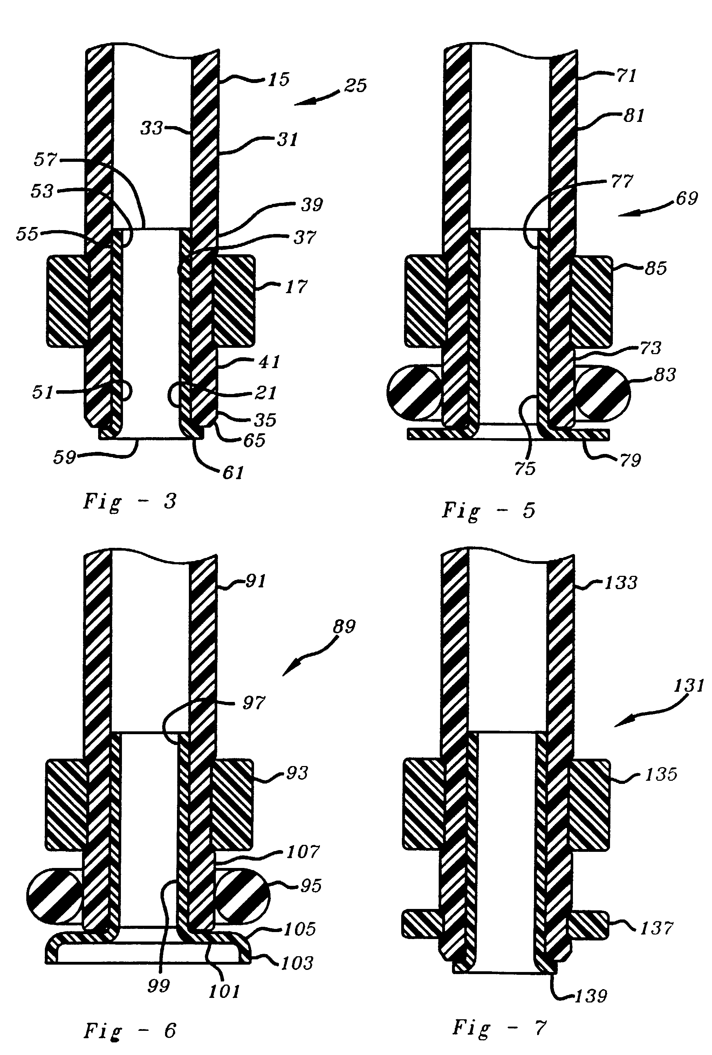

A third preferred embodiment of the present invention tubular assembly 69 is illustrated in FIG. 5. In this embodiment, a tubular member 71 is substantially similar to that of the first embodiment tubular member 15. However, distal end 73 of tubular member 71 does not have a tapered portion as does the first embodiment. Nevertheless, ferrule 75 has a cylindrical-shaped longitudinal portion 77 which projects inside tubular member 71 and has a flange 79 radially extending outward therefrom and normal thereto. Flange 79 extends past an outside surface 81 of tubular member 71 and serves to retain an annular-shaped seal 83 or O-ring thereupon and to center distal end 73 within housing 23 (see FIGS. 1 and 2). Seal 83 is located between flange 79 and a bushing 85. Bushing 85 is substantially identical to the bushing 17 of the first preferred embodiment. Seal 83 is preferably made from an elastomeric rubber or thermoplastic resin.

As is shown in FIG. 6, a fourth preferred embodiment of the present invention tubular assembly 89 comprises a tubular member 91, a bushing 93, a seal 95 and a ferrule 97. Tubular member 91, bushing 93 and seal 95 have the same configuration as those described for the first illustrative embodiment. However, ferrule 97 has a longitudinal cylindrically-shaped portion 99 which projects concentrically within tubular member 91 and has a flange 101 radially extending outward therefrom and normal thereto. Furthermore, a lip 103 protrudes perpendicularly outward from flange 101 around the circumference 105 thereof. Lip 103 acts to center and stabilize an untapered distal end 107 of tubular member 91 within the mating female housing 23 (see FIGS. 1 and 2). Also, as with the preceding third embodiment, flange 101 of ferrule 97 serves to retain seal 95 between itself and bushing 93.

Referring to FIG. 7, a fifth preferred embodiment of the present invention tubular assembly 131 comprises a tubular member 133, a pair of bushings 135 and 137, and a ferrule 139. Seal 19 (see FIG. 1) can be retained between bushings 135 and 137 and around tubular member 133. Bushings 135 and 137 are affixed to tubular member 133 by insertion of ferrule 139 therewithin.

The processing steps required to produce the present invention tubular assembly having a bead thereon are shown in FIGS. 8-11. Tubular member 31 preferably has outside surface 38 (see FIG. 9) at position 37 which is flush with the cylindrical outside surfaces 39 and 41 longitudinally adjacent thereto; this can best be seen in FIG. 8. However, as can be alternately observed in FIG. 4, predetermined position 37 may have circumferential groove 43 formed therein. The first step is illustrated in FIG. 9 wherein bushing 17 is installed around outside surface 38 of tubular member 31 at predetermined position 37. At this processing step, bushing 17 fits snugly around outside surface 38, however, bushing 17 can still be forced to move longitudinally along tubular member 15. The second processing step is shown in FIG. 10. Longitudinal portion 51 of ferrule 21 is inserted within inside surface 33 of tubular member 15. Referring to FIG. 11, in step three, leading end 57 of ferrule 21 longitudinally projects within tubular member 15 past predetermined position 37. Ferrule 21 expands inside surface 33 and outside surfaces 39 and 41 radially outward away from the longitudinal axis of tubular member 15. However, bushing 17 restricts the radial expansion of tubular member 15 at predetermined position 37. Thus, bushing 17 is firmly retained and located upon tubular member 15 thereby forming a secure bead therearound.

While a number of embodiments of this tubular assembly have been disclosed, it will be appreciated that various modifications may be made without departing from the present invention. For example, multiple seals and multiple bushings may be located longitudinally along the tubular member. Also, the ferrule does not have to contain a flange at the end thereof. Furthermore, while a specific retainer and a specific housing configuration have been shown and described, various other quick connect fasteners or threaded fittings may be used as part of a connector assembly. Moreover, such tubular assemblies may be incorporated into appliances, industrial structures and automotive vehicles.

## Claims

1. A tubular assembly (25, 69, 89, 131) for use in communicating a fluid media in combination with a housing (23) having a receivable female configuration thereto, said housing further having a cylindrical inside surface (40) which defines a central through bore (36) extending therein, said tubular assembly comprising:
a tubular member (15, 47, 71, 91, 133) being cylindrical in shape and having a male configuration thereof, said tubular member further having an inside surface (33) and an outside surface (31) with a distal end (35, 73, 107) thereupon, said outside surface having a predetermined position (37) thereon;
means (19, 83, 95) to seal between said tubular member (15, 47, 71, 91, 133) and said inside surface (40) of said housing (23);
a bushing (17, 85, 93, 135) located at said predetermined position (37) along said outside surface of said tubular member and cooperatively fitting therearound, said bushing restricting radial expansion of said tubular member; and
a ferrule (21, 75, 97, 139) having a longitudinal portion (51, 77, 99) thereof which is cylindrical in shape being inserted within said distal end of said tubular member, said tubular member at said predetermined position (37) being restricted from radial outward expansion by said bushing (17, 85, 93, 135) whereas said bushing is securely retained at said predetermined position (37) upon said tubular member (15, 47, 71, 91, 133),
characterised in that:-
said tubular member (15, 31, 71, 91, 133) is composed of an expandable material;
said predetermined position (37) and said bushing (17, 85, 93, 135) are located at a predetermined longitudinal distance from said distal end;
portions of said inside and outside tubular member surfaces (39, 41) which are longitudinally adjacent to and on each side of said predetermined position (37) are expanded radially outward by said longitudinal portion (51, 77, 99) of said ferrule therewithin with respect to the tubular member at said predetermined position (37) which is restricted from radial outward expansion by the bushing (17, 85, 93, 135); and
the sealing means (19, 83, 95) seals between said outside surface (31) of the tubular member and said inside surface (40) of the housing (23).

2. The tubular assembly of Claim 1 wherein said ferrule (21, 75, 97, 139) has an outwardly extending flange (61, 79, 101) at a trailing end thereof, said flange of said ferrule being proximate with said distal end (35, 73, 107) of said tubular member (15, 47, 71, 91, 133) after said ferrule is installed therein.

3. The tubular assembly of Claim 2 characterised in that said flange (79, 101) of said ferrule (75, 97) extends radially outward past said outside surface (31) of said tubular member and acts to retain said sealing means (83, 95) thereupon, in that said sealing means (83, 95) is located between said bushing (85, 93) and said flange of said ferrule.

4. The tubular assembly of Claim 3 characterised in that said flange (101) of said ferrule (97) has a lip portion (103) protruding from a circumferential edge (105) thereof and is oriented substantially normal thereto.

5. The tubular assembly of Claim 1 characterised in that said flange (61) of said ferrule (21) extends radially outwardly past said inside surface (33) of said tubular member (15) and terminates prior to said outside surface (31) thereof.

6. The tubular assembly of any preceding claim characterised by the provision of means (13) for retaining said tubular member to said housing.

7. The tubular assembly of Claim 6 wherein said retaining means (13) is a quick connect fastening device.

8. The tubular assembly of Claim 6 wherein said retaining means is a threaded fitting.

9. The tubular assembly of any preceding claim characterised in that said outside surface (45) of said tubular member (47) has a groove (43) located circumferentially therearound, in that said groove is positioned at said predetermined position (37), and in that said bushing (17, 85, 93) fits partially within said groove when said tubular member (47) is radially expanded by said ferrule (21) being inserted therewithin.

10. A method for adding a bead around a tubular member for use in a tubular assembly which communicates a fluid media, said method comprising:
(a) installing an annular-shaped bushing (17) around tubular member (15), said tubular member being cylindrically shaped and having an outside surface (31) and an inside surface (33) thereon, said tubular member further having a distal end (35) thereto; and
(b) inserting a longitudinal portion (51) of a ferrule (21) into said distal end of said tubular member, said longitudinal portion of said ferrule being cylindrically shaped;
characterised in that:-
said bushing (17) is positioned on said tubular member in a predetermined position (37) spaced from said distal end (35);
said tubular member (15) is expandable; and
portions of said inside and outside surfaces (39, 41) of said tubular member (15) longitudinally adjacent to and on each side of said bushing (17) are expanded by said portion of the ferrule, said bushing restricting radial expansion of the tubular member at said predetermined position.

11. The method of Claim 10 characterised in that:-
said tubular member (47) has a groove (43) located circumferentially therearound at said predetermined position (37);
said bushing (17) is installed around said tubular member (47) in alignment with said groove (43); and
the bushing (17) fits partially within the groove (43) when said tubular member (47) is radially expanded by the ferrule (21) being inserted therewithin.

## Patentansprüche

1. Rohrseitige Anordnung (25, 69, 89, 131) für den Gebrauch zum Transport von Flüssigkeiten in Verbindung mit einem Gehäuse (23), das eine zu deren Aufnahme dienende Buchsenkonfiguration und des weiteren eine zylindrische Innenfläche (40) aufweist, welche darin eine zentrale Durchgangsbohrung definiert, wobei die rohrseitige Anordnung ein rohrförmiges Teil (15, 47, 71, 91, 133), das eine zylindrische Gestalt aufweist und ein männliches Teil darstellt und des weiteren eine Innenfläche (33) und eine Außenfläche (31) und ein distales Ende (35, 73, 107) besitzt und die Außenfläche eine vorbestimmte Position aufweist,
Mittel (19, 83, 95) zum Dichten zwischen dem rohrförmigen Teil (15, 47, 71, 91, 133) und der Innenfläche (40) des Gehäuses (23),
eine Buchse (17, 85, 93, 135), die an der vorbestimmten Position (37) entlang der Außenfläche des rohrförmigen Teils positioniert ist und sich passend um diese herum erstreckt und die radiale Ausdehnung des rohrförmigen Teils begrenzt, und
eine Hülse (21, 75, 97, 139), die einen Längsabschnitt (51, 77, 99) aufweist, welche eine zylindrische Gestalt hat und in das distale Ende des rohrförmigen Teils eingesetzt ist, wobei das rohrförmige Teil an der vorbestimmten Position durch die Buchse (17, 85, 93, 135) an einer radialen Ausdehnung gehindert ist und die Buchse fest an der vorbestimmten Position (37) auf dem rohrförmigen Teil (15, 47, 71, 91, 133) gehalten ist, umfaßt,
dadurch gekennzeichnet,
daß das rohrförmige Teil (15, 47, 71, 91, 133) aus einem dehnbaren Material besteht,
daß die vorbestimmte Position (37) und die Buchse (17, 85, 93, 135) mit einem vorbestimmten Längsabstand von dem distalen Ende angeordnet sind,
daß Abschnitte der Innenfläche und der Außenfläche des rohrförmigen Teils (39, 41), die sich in der Längsrichtung neben jeder Seite der vorbestimmten Position (37) befinden, durch den Längsabschnitt (51, 77, 99) der darin befindlichen Hülse im Verhältnis zu der vorbestimmten Position (37) des rohrförmigen Teils, deren radiale Ausdehnung nach außen durch die Buchse (17, 85, 93, 135) begrenzt ist, nach außen verformt sind und
daß die Dichtmittel (19, 83, 95) zwischen der Außenfläche (31) des rohrförmigen Teils und der Innenfläche (40) des Gehäuses (23) abdichten.

2. Rohrseitige Anordnung nach Anspruch 1,
wobei die Hülse (21, 75, 97, 139) an ihrem zweiten Ende einen sich nach außen erstreckenden Flansch (61, 79, 101) besitzt und der Flansch der Hülse in der Nähe des distalen Endes (35, 73, 107) des rohrförmigen Teils (15, 47, 71, 91, 133) liegt, nachdem die Hülse darin eingesetzt ist.

3. Rohrseitige Anordnung nach Anspruch 2,
dadurch gekennzeichnet,
daß der Flansch (79, 101) der Hülse (75, 97) sich radial nach außen über die Außenfläche (31) des rohrförmigen Teils hinaus erstreckt und die Dichtmittel (83, 95) auf diesem dadurch hält, daß die Dichtmittel (83, 95) zwischen der Buchse (85, 93) und dem Flansch der Hülse angeordnet sind.

4. Rohrseitige Anordnung nach Anspruch 3,
dadurch gekennzeichnet,
daß der Flansch (101) der Hülse (97) einen Lippenabschnitt (103) aufweist, der von einer Umfangskante (105) hervorsteht und sich im wesentlichen normal zu dieser erstreckt.

5. Rohrseitige Anordnung nach Anspruch 1,
dadurch gekennzeichnet,
daß der Flansch (61) der Hülse (21) sich radial nach außen über die Innenfläche (33) des rohrförmigen Teils (15) hinaus erstreckt und vor dessen Außenfläche (33) endet.

6. Rohrseitige Anordnung nach einem der vorangehenden Ansprüche,
dadurch gekennzeichnet,
daß Mittel (13) zum Halten des rohrförmigen Teils am Gehäuses vorgesehen sind.

7. Rohrseitige Anordnung nach Anspruch 6,
wobei die Haltemittel (13) als eine Schnellverbindungs- und Befestigungsvorrichtung dargestellt sind.

8. Rohrseitige Anordnung nach Anspruch 6,
wobei die Haltemittel als eine Schraubverbindung dargestellt sind.

9. Rohrseitige Anordnung nach einem der vorangehenden Ansprüche,
dadurch gekennzeichnet,
daß die Außenfläche (45) des rohrförmigen Teils (47) eine in Umfangsrichtung umlaufende Nut (43) aufweist, die an der vorbestimmten Position (37) angebracht ist, und daß die Buchse (17, 85, 93) teilweise in die Nut eingreift, wenn das rohrförmige Teil (47) durch die darin eingesetzte Hülse (21) radial erweitert ist.

10. Verfahren zum Anbringen einer Wulst um ein rohrförmiges Teil herum,
welcher zur Verwendung in einer rohrseitigen Anordnung, die eine Flüssigkeit transportiert, bestimmt ist und welches
das Anbringen einer ringförmigen Buchse (17) um ein rohrförmiges Teil, das eine zylindrische Gestalt hat und eine Außenfläche (31) und eine Innenfläche (33) und des weiteren ein distales Ende (35) aufweist, und
das Einsetzen eines Längsabschnitts (51) einer Hülse (21), der zylindrisch ist, in das distale Ende des rohrförmigen Teils umfaßt,
dadurch gekennzeichnet,
daß die Buchse (17) auf dem rohrförmigen Teil an einer vorbestimmt von dem distalen Ende (35) entfernten Position (37) angeordnet wird,
daß das rohrförmige Teil (15) erweiterbar ist und daß Abschnitte der Innenfläche (39) und der Außenfläche (41) des rohrförmigen Teil (15), die in Längsrichtung benachbart zu beiden Seiten der Buchse (17) liegen, durch den Längsabschnitt der Hülse geweitet werden und daß die Buchse die radiale Ausdehnung des rohrförmigen Teils an der vorbestimmten Position begrenzt.

11. Verfahren nach Anspruch 10,
dadurch gekennzeichnet,
daß das rohrförmige Teil (47) an der vorbestimmten Position (37) einer um seinen Umfang herum umlaufende Nut (43) aufweist,
daß die Buchse (17) um das rohrförmige Teil (47) herum zur Nut (43) ausgerichtet angebracht ist, und
daß die Buchse (17) teilweise in die Nut (43) eingreift, wenn das rohrförmige Teil (47) durch die darin eingesetzte Hülse (21) radial geweitet wird.

## Revendications

1. Ensemble tubulaire (25, 69, 89, 131) destiné à être utilisé pour la communication de fluides en combinaison avec un boîtier (23) ayant une configuration femelle de réception, le boîtier ayant en outre une surface cylindrique interne (40) qui délimite un trou central (36) qui le traverse, l'ensemble tubulaire comprenant :
un organe tubulaire (15, 47, 71, 91, 133) de forme cylindrique et ayant une configuration mâle, l'organe tubulaire ayant en outre une surface interne (33) et une surface externe (31) avec une extrémité externe (35, 73, 107) sur cette surface, la surface externe ayant une position prédéterminée (37) sur ledit organe,
un dispositif (19, 83, 95) d'étanchéité placé entre l'organe tubulaire (15, 47, 71, 91, 133) et la surface interne (40) du boîtier (23),
un manchon (17, 85, 93, 135) occupant une position prédéterminée (37) le long de la surface externe de l'organe tubulaire et s'ajustant autour de celui-ci en coopération avec lui, le manchon limitant la dilatation radiale de l'organe tubulaire, et
une virole (21, 75, 97, 139) ayant une partie longitudinale (51, 77, 99) de forme cylindrique qui pénètre à l'extrémité externe de l'organe tubulaire, l'organe tubulaire, à ladite position prédéterminée (37), subissant une limitation de sa dilatation radiale vers l'extérieur par le manchon (17, 85, 93, 135) alors que le manchon est fermement retenu en position prédéterminée (37) sur l'organe tubulaire (15, 47, 71, 91, 133),
caractérisé en ce que :
l'organe tubulaire (15, 31, 71, 91, 133) est composé d'un matériau dilatable,
ladite partie prédéterminée (37) et le manchon (17, 85, 93, 135) sont à une distance longitudinale prédéterminée de l'extrémité externe,
les parties des surfaces interne et externe de l'organe tubulaire (39, 41) qui sont adjacentes longitudinalement à ladite position prédéterminée (37) de part et d'autre de celle-ci sont dilatées radialement vers l'extérieur par la partie longitudinale (51, 77, 99) de la virole placée à l'intérieur de l'organe tubulaire à la position prédéterminée (37) qui subit une limitation de sa dilatation radiale vers l'extérieur du fait de la présence du manchon (17, 85, 93, 185), et
le dispositif d'étanchéité (19, 83, 95) forme l'étanchéité entre la surface externe (31) de l'organe tubulaire et la surface interne (40) du boîtier (23).

2. Ensemble tubulaire selon la revendication 1, dans lequel la virole (21, 75, 97, 139) a un flasque (61, 79, 101) qui s'étend vers l'extérieur à une extrémité de queue, le flasque de la virole étant proche de l'extrémité externe (35, 73, 107) de l'organe tubulaire (15, 47, 71, 91, 133) après que la virole a été installée à l'intérieur.

3. Ensemble tubulaire selon la revendication 2, caractérisé en ce que le flasque (79, 101) de la virole (75, 97) s'étend radialement vers l'extérieur au-delà de la surface externe (31) de l'organe tubulaire et a pour action de retenir le dispositif d'étanchéité (83, 95), et en ce que le dispositif d'étanchéité (83, 95) est placé entre le manchon (85, 93) et le flasque de la virole.

4. Ensemble tubulaire selon la revendication 3, caractérisé en ce que le flasque (101) de la virole (97) possède une partie de lèvre (103) qui dépasse d'un bord circonférentiel (105) et qui est orientée en direction pratiquement perpendiculaire à celui-ci.

5. Ensemble tubulaire selon la revendication 1, caractérisé en ce que le flasque (61) de la virole (21) s'étend radialement vers l'extérieur au-delà de la surface interne (33) de l'organe tubulaire (15) et se termine avant sa surface externe (31).

6. Ensemble tubulaire selon l'une quelconque des revendications précédentes, caractérisé par la présence d'un dispositif (13) de retenue de l'organe tubulaire sur le boîtier.

7. Ensemble tubulaire selon la revendication 6, dans lequel le dispositif de retenue (13) est un dispositif de fixation à raccordement rapide.

8. Ensemble tubulaire selon la revendication 6, dans lequel le dispositif de retenue est un embout vissé.

9. Ensemble tubulaire selon l'une quelconque des revendications précédentes, caractérisé en ce que la surface externe (45) de l'organe tubulaire (47) possède une gorge (43) placée à sa circonférence, en ce que la gorge occupe ladite position prédéterminée (37), et en ce que le manchon (17, 85, 93 ) s'ajuste partiellement dans la gorge lorsque l'organe tubulaire (47) est dilaté radialement par insertion de la virole (21).

10. Procédé d'addition d'un cordon autour d'un organe tubulaire destiné à être utilisé dans un ensemble tubulaire qui assure la communication d'un fluide, ledit procédé comprenant :
(a) l'installation d'un manchon (17) de forme annulaire autour de l'organe tubulaire (15), l'organe tubulaire ayant une forme cylindrique et possédant une surface externe (31) et une surface interne (33), l'organe tubulaire ayant en outre une extrémité externe (35), et
(b) l'insertion d'une partie longitudinale (51) d'une virole (21) à l'extrémité externe de l'organe tubulaire, la partie longitudinale de la virole ayant une forme cylindrique,
caractérisé en ce que :
le manchon (17) est positionné sur l'organe tubulaire en position prédéterminée (37) à distance de l'extrémité externe (35) ,
l'organe tubulaire (15) est dilatable, et
les parties des surfaces interne et externe (39, 41) de l'organe tubulaire (15) adjacentes longitudinalement au manchon (17) et placées de part et d'autre de celui-ci sont dilatées par ladite partie de la virole, le manchon limitant la dilatation radiale de l'organe tubulaire à ladite position prédéterminée.

11. Procédé selon la revendication 10, caractérisé en ce que :
l'organe tubulaire (47) possède une gorge (43) placée à sa circonférence à ladite position prédéterminée (37),
le manchon (17) est placé autour de l'organe tubulaire (47) dans l'alignement de la gorge (43), et
le manchon (17) s'ajuste partiellement dans la gorge (43) lorsque l'organe tubulaire (47) subit une dilatation radiale sous l'action de la virole (21) introduite dans cet organe.
